# EUROPEAN PATENT APPLICATION

(11) **EP 1 919 177 A1**
(43) Date of publication of application: **07.05.2008**
(21) Application number: 07115058.5
(22) Date of filing: 27.08.2007
(51) Int. Cl.: H04M 3/436, H04M 3/533

(54) **System and method for call screening using a voice mail system**

(30) Priority: 04.11.2006 US 856481 P
(71) Applicant: Inter-Tel (Delaware), Inc., 85281 AZ Arizona Tempe (US)
(72) Inventor: Setzer, Ronald, Gilbert AZ 85234 (US); Gaetano, Arthur, Chandler AZ 85248 (US)
(74) Representative: Curley, Donnacha John

(57) **Abstract**

A mail delivery service that allows users of a networked call processing system to listen to messages that are being left to their mailbox in real time. Improvements applied to this invention allow full control of both the message and the call that is leaving the message to more effectively screen the call and enhance follow up communication with the calling party. The system further enables users to forward messages in real-time to other users within the telephone network, conference in other users, and discuss the message as the call is being recorded by a voicemail system. Other monitoring options are provided whereby the caller may, for example, add a textual notation to a call, terminate the call, and apply a custom configured hot rule to manage the call in accordance with the user's wishes.

## Description

### CROSS REFERENCE TO RELATED APPLICATIONS

This application includes subject matter that is related to and claims priority from U.S. Provisional Patent Application Serial No. 60/856,481 entitled "Call Screening During Voice Message" and filed on November 4, 2006.

### FIELD OF INVENTION

The present invention relates generally to networked communications systems that have voice message functionality, and more particularly to networked communications systems configured to facilitate screening a voice message in real time as the caller is leaving the voice message.

### BACKGROUND OF THE INVENTION

Owners of telecommunications devices have long desired the ability to better screen phone calls that they receive. These individuals may be attempting to avoid telemarketing calls or calls from specific individuals, or they may be trying to make sure they answer an important call. Furthermore, groups of individuals working together are constantly looking for more efficient ways to process incoming phone calls and redirect those phone calls to the appropriate person in their organization. Stated another way, there is a need for improved ways to efficiently make decisions about how to handle received phone calls.

Caller identification (ID) devices have provided limited ability to screen calls. But these devices have their limitations. For example, caller ID devices generally only identify the phone, but not the caller or the purpose or urgency of the call. Additional information, useful for making decisions about how to handle received phone calls, may be contained in the voicemail message left by the caller. Various attempts by others have been made to facilitate allowing a user of a telephone to listen to the message as it is being left. However, these attempts have provided the user with limited options and continue to leave a need for improved call screening systems and methods. In short there is a need for additional options for screening and handling telephone calls as a caller is leaving a message.

### SUMMARY OF THE INVENTION

It is an object of the present invention to provide an improved method for reviewing voice messages as they are in the process of being left in a user's voice mailbox by a caller. In an exemplary embodiment, the user is provided an indication that a live voicemail message is being left by way of, for example, a solid or rapidly flashing light on an endpoint device, a display on an endpoint device, a tone on or from an endpoint device, a popup message on a computer screen, an audio dialogue presented via a voice recognition system, and/or the like. The user may acknowledge the notification and be presented with further options including a series of options that determine how the user wants to proceed to handle the message and the call. In this exemplary embodiment, the user may make call-screening decisions based on information gathered regarding the content of the caller's message and information concerning the caller's identity.

In one exemplary embodiment, an entire record of the call may be saved and associated with a user (mail system subscriber), even if the user elects to pick up the call from the message-leaving process and speak with the caller in a live conversation.

In another exemplary embodiment, upon receiving notification of the call, the user may execute a series of "hot rules" by pressing a key or clicking an icon. This will handle the call per a group of commands associated with the hot rule and either continue to record the message, prompt the caller with a canned audio message, stop recording and save the message left to that point, or delete the message and simply connect the caller to the user, all in accordance with user selectable options.

In yet another exemplary embodiment, a voice recognition system may be applied to messages as they are being left. The voice recognition system may use a keyword identification list that displays statistically significant hits on key words as the caller begins leaving the message. In a further exemplary embodiment, the time-based location of each keyword in the message is shown during the message notification display so as to allow rapid indexing back though the message to listen starting at the utterance associated with a particular keyword. This skipping process may continue until the user decides how to proceed with the call screening process. For example, a progress bar is displayed to illustrate the total time of the message along with a relative indication of where in the message the call monitoring is currently taking place.

In accordance with further exemplary embodiments, while a message is being monitored, the user may attach notes or comments to it by pressing a button or clicking an icon to bring up a text-edit box that accepts entered text strings. These notes are saved along with the message to assist other users in reviewing the message in real-time or after it has been saved for later review. Messages may be copied to additional users by selecting the appropriate icon or pressing a key.

In accordance with further exemplary embodiments, as part of the screening process, the user may elect to add others into the message monitor as a conference. As more conferees are added, they may talk among themselves while maintaining a one-way monitor connection with the caller who is leaving the message and exchange text messages associated with the call being screened. The original user may remain in full control of the monitor display, moderate the associated text messaging, and also control the conference function. Options to proceed with the call screening procedure may include adding the caller to the conference using the same recording options mentioned previously, continuing the message and conference separately, or terminating the conference and connecting directly to the caller.

In another exemplary embodiment, if multiple callers are each leaving a message in the same voice mailbox, a facility is provided to separately display and allow individual screening of each call. The controls mentioned previously are repeated for each call on the computer screen and allow the user to control each separately. Multiple messages are facilitated by placing information at the top and bottom of each call's window to allow the windows to be cascaded on the display and still monitored for critical information.

### BRIEF DESCRIPTION OF THE DRAWINGS

A more complete understanding of the present invention may be derived by referring to the detailed description and claims when considered in connection with the Figures, wherein like reference numbers refer to similar elements throughout the Figures, and:

Figure 1 is a block diagram illustrating a high level view of the major system components for an exemplary system for voice message call screening in accordance with exemplary embodiments of the present invention;

Figure 2 is a screenshot of a call screening interface in accordance with an exemplary embodiment of the present invention;

Figure 3 is a flow chart of major steps in a method for live screening of voice messages in accordance with exemplary embodiments of the present invention; and,

Figure 4 is a flow chart illustrating an exemplary process for providing notification that a voice message is being left.

### DETAILED DESCRIPTION

The detailed description of exemplary embodiments of the invention herein makes reference to the accompanying drawings, which show exemplary embodiments by way of illustration and its best mode. While these exemplary embodiments are described in sufficient detail to enable those skilled in the art to practice the invention, it should be understood that other embodiments may be realized and that logical and mechanical changes may be made without departing from the spirit and scope of the invention. Thus, the detailed description herein is presented for purposes of illustration only and not of limitation.

In general, in accordance with an exemplary embodiment of the present invention systems and methods are provided for facilitating live screening of messages. For example, the system may visually and/or audibly alert a user that a voice message is being left by a caller. The system may then enable the user to interact with the system by way of a personal computer and/or endpoint device to select an option to listen in on the message in real-time. The user may also select whether to accept the call or continue to allow the recording of the voice message for later retrieval. In accordance with various aspects of the present invention, a user may interact with a computing device and/or endpoint device to retrieve a call, apply rules to a call, add a notation to the call file, copy the message to other users, invoke an audio prompt to the caller, and/or the like. Furthermore, while a message is being left for a user, the user may have the option to: listen to the whole message; not listen to the message; listen to only the portions of the message that are of interest; stop listening to the message part-way through the message; direct whether to continue recording the message; play a canned response to the caller or to drop the caller; index playback of the message; view keywords used in the message; and/or listen to the message starting where those keywords are used. Thus, in accordance with various aspects of the present invention, systems and methods are configured to provide additional options for screening calls as a caller is leaving a message.

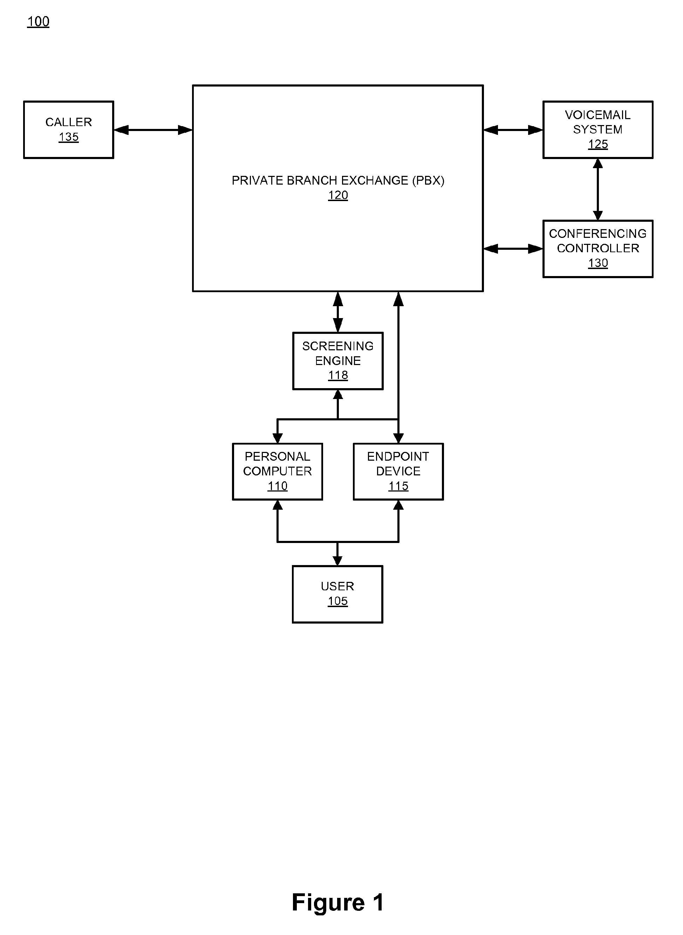

With reference to Figure 1, and in accordance with various exemplary embodiments of the present invention, the system includes software, hardware, and/or data components that together comprise a Voice Message Call Screening (VMCS) system 100. In accordance with an exemplary embodiment, VMCS system 100 comprises at least one of a personal computer 110 and an endpoint device 115 (e.g., telephone). VMCS system 100 further comprises a screening engine 118, a Private Branch Exchange (PBX) 120, a voicemail system 125, and a conference call controller 130. Any number of users 105 and callers 135 may interact with the various components of VMCS 100 as will be described in greater detail herein.

Caller 135 represents any person, entity, or device that originates a call that ends up being recorded at voicemail system 125. Caller 135 may call on a standard telephone, cell phone, or any other telecommunications devices now known or hereinafter invented. The call may be delivered to system 100 via any communications systems or combination of such systems. In an exemplary embodiment, the call is delivered via the public switched telephone network (PSTN), however the internet and other communications systems, and combinations thereof, may also be used to transmit the call from caller 135 to system 100.

User 105 may be any person with access to system 100. For example, user 105 may have access to endpoint device 115 or personal computer 110. In an exemplary embodiment, user 105 is the intended recipient of the call from caller 135. User 105 may be, for example, a customer service representative for a financial services corporation who typically receives calls from established clients needing to provide and/or receive information. In other exemplary embodiments, user 105 is an operator, business person, resident, cell phone user, and/or the like.

User 105 may receive calls from caller 135 by way of PBX 120, which routes the call to the appropriate endpoint device 115. Moreover, user 105 may interact with endpoint device 115 to receive a recorded voice message that is left by caller 135 when user 105 is not available to receive the call or for whatever reason does not answer the call. In another embodiment, user 105 may not be the person originally called, but rather may be an operator or voicemail monitor, or other person designated to receive the call. In one embodiment, user 105 may further interact with endpoint device 115 to monitor and/or control a voice message while the message is being left by caller 135. Thus, in accordance with the invention, endpoint device 115 maybe configured to enable user 105 to listen in on voice messages on a real-time basis.

In one embodiment, endpoint device 115 may comprise any hardware and/or software suitably configured to facilitate verbal communications between two or more parties and/or devices over communications media such as the PSTN. Endpoint device 115 may take the form of a standard office phone, a menu-driven display phone, an IP-based phone, a soft-phone, and the like. In an exemplary embodiment, endpoint device 115 is a menu-driven display phone that is equipped with a display device including a graphical user interface (GUI). Endpoint device 115 may include physical keys that enable user 105 to place calls to specific telephone numbers and/or interact with the various other elements of system 100. In another embodiment, such physical keys may be enhanced and/or replaced by soft keys, which are incorporated within a GUI of a display device. In an exemplary embodiment, endpoint device 115 is configured to communicate with PBX 120 to provide telecommunications features such as those now know in the art. Furthermore, PBX 120 may be configured to communicate with screening engine 118 (either directly or via PBX 120) to facilitate live voicemail screening.

In one embodiment, user 105 may interact with personal computer 110 in addition to, or in place of, endpoint device 115 to monitor and/or control voice messages as they are being left by caller 135. Personal computer 110 may comprise any hardware and/or software suitably configured to provide user 105 with a call screening interface. Personal computer 110 may, for example, be configured to facilitate verbal communications between two or more parties and/or devices over a PSTN. In an exemplary embodiment, personal computer 110 comprises a speaker and or microphone. In one embodiment, personal computer 110 is configured to interact with screening engine 118 (directly or via PBX 120) to receive voicemail notifications, monitor a voice message in real-time, and perform a number of additional operations as will be disclosed herein. Personal computer 110 may interact with screening engine 118, or any other system 100 component, by way of known networking methods and protocols.

In accordance with an exemplary embodiment of the present invention, screening engine 118 is configured to interact with voicemail system 125, conferencing controller 130, and endpoint device 115 and/or personal computer 110. This interaction may be direct and/or by way of PBX 120. In an exemplary embodiment, screening engine 118 is configured to receive Call Detail Records (CDR) from a switch (e.g., PBX 120). The CDR may contain information relating to the identity of the caller, and other information related to the call. VMCS system 100 may be configured such that portions of the information in the CDR are presented to user 100 within a screening interface at personal computer 110 and/or endpoint device 115. Screening engine 118 may comprise any hardware and/or software suitably configured to interact with the various components of system 100 in order to provide the voicemail call screening functionality as described herein. Screening engine 118 may reside as program code within PBX 120, personal computer 110, endpoint device 115, or any other system 100 components. In one embodiment, screening engine 118 sends messages to and receives messages from PBX 120 in relation to caller activities and user selected call screening options.

In one exemplary embodiment, PBX 120 may comprise any hardware and/or software suitably configured to interconnect endpoint devices. It should be understood that the term PBX is used quite loosely to refer to any in house or outsourced telephony switching system. In one exemplary embodiment, PBX 120 is a private voice-communications-capable switching facility which provides connection between endpoint devices connected to it, including dial service, and may provide connections between those endpoint devices and other communications networks, including the Public Switch Telephone Network (PSTN). PBX 120 may further include, or be interconnected with, a voicemail system 125 and a conferencing controller 130.

In one exemplary embodiment, voicemail system 125 comprises any hardware and/or software suitably configured to receive incoming calls and record voice messages from callers 135 for later playback by the intended call recipient (e.g., user 105). Practitioners will appreciate that a variety of voicemail systems are commercially available and that such systems may reside within an existing PBX 120 system or as a standalone server in the form of a computing device. In some embodiments, voicemail system 125 stores analog audio. In other exemplary embodiments, voicemail system 125 is configured to convert analog audio from a caller's voice into digitized data that can be stored on a computer hard drive.

In one exemplary embodiment, conferencing controller 130 comprises any hardware and/or software suitably configured to interconnect three or more endpoint devices within a single call. Conferencing controller may reside as a standalone hardware/software system or may be integrated with PBX 120 or any other system 100 component. In one embodiment, conferencing controller 130 is invoked by screening engine 118 in response to a user's desire to monitor a live voice message. As such, conferencing controller interconnects caller 135, voicemail system 125, and personal computer 110, and/or endpoint device 115.

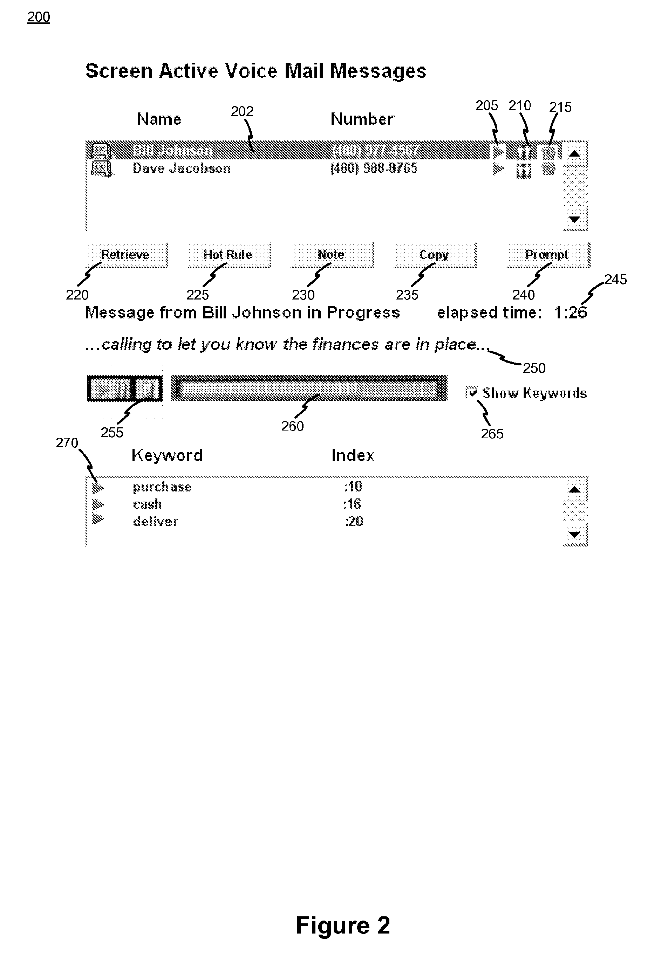

Referring now to Figure 2, a layout of a Graphical User Interface (GUI) for an exemplary call screening interface 200 is shown. In one embodiment, call screening interface 200 is provided by way of a display device attached to personal computer 110. In another embodiment, call screening interface 200 may be displayed via an endpoint device 115 with physical keys and a display. For the purpose of explanation, however, the personal computer 110 configuration for voice message call screening is described herein. For example, the versatility that is inherent to the personal computer 110 may better allow all of the features to be implemented within its interface, whereas a physical endpoint device may not implement certain features due to the limitations of displayed information. However, practitioners will appreciate that the invention may be equally effective when implemented partially or entirely through an endpoint device 115.

In accordance with various exemplary embodiments of the present invention, call screening interface 200 is configured to provide user 105 with a variety of options and functionality for handling a voice message as it is being recorded. These options and functionality may include: notifying a user that messages are being left; identifying for the user the caller leaving the message; and notifying the user of the use of key words in a message being left. These options and functionality may also include allowing a user to: select a call to screen; monitor the voice message as it is being recorded; listen to selected portions of the voice message as it is being recorded, skip around the message; skip to key words in the message; invite other users to monitor the message; forward the message to other users; terminate the call mid-message; connect to the caller mid message; add notes to the message; and/or the like. Some of these options and functionality will now be discussed in further detail.

In accordance with various exemplary embodiments of the present invention, call screening interface 200 is configured to display information pertaining to one or more callers 135 that are in the process of leaving live messages. User 105 may select each call's information line 202 to access more message content information and available call controls as appropriate for the call. In one exemplary embodiment, when a message-leaving session is terminated (by caller 135 or by user 105), the corresponding information line 202 is cleared and the message is moved to voicemail system 125 to be stored and later retrieved in a manner normally associated with known voicemail systems.

In one exemplary embodiment, notification of an incoming call is provided by way of an instant message, dialog box, popup window, and/or the like. This notification may be configured, for example, to prompt user 105 to select whether or not they would like to monitor a live message in progress. In one exemplary embodiment, the appearance of a new line 202 serves as notification of a new incoming message. If user 105 chooses to monitor the live message, then various controls are displayed and become available for active use. In another exemplary embodiment, such controls are available for immediate use in monitoring a voicemail message that is being left.

One such control is the "play" control 255, which enables user 105 to monitor the audio of a message from the beginning. The message may be listened to by user 105 by way of, for example, a speaker on personal computer 110 or an associated endpoint device 115. By clicking on the end of progress bar 260, user 105 listens in on the message as it is being left in real-time. By selecting any other point within the progress bar 260 the message may be monitored at any point of time throughout its duration.

In another exemplary embodiment, pause, stop, fast forward, rewind and similar functions may be provided in interface 200 to facilitate listening to desired portions of the message. Furthermore, interface 200 may be configured to facilitate a high speed playback of the recording to "catch-up" with the real time message. Upon catching up, the playback may then convert to real time play back. It is further contemplated that if the caller finishes leaving the message before user 105 finishes monitoring the message, that some of the functionality described herein may still be operable, such as copying the message to another user, leaving notes and the like.

In one embodiment, system 100 includes speech recognition software to identify key words as a voice message is being left. This keywords feature may be always on, or may be selectively turned on and off. In the embodiment where the keywords feature may be selectively turned on and off, a "Show Keywords" checkbox 265 may be provided to facilitate a user selectively turning the keywords functionality on and off. Furthermore, any method of turning the keywords functionality on and off may be used. Although certain exemplary buttons, links, and/or the like are described herein with specific names and functionality, it should be appreciated that any method of providing input that causes the VMCS system to take a particular action is contemplated as being part of this disclosure. For example, the buttons may be given different names, be shaped differently, or use different technologies to cause the desired action to be performed; but these embodiments are also intended to be covered by the present description.

If the "Show Keywords" checkbox 265 is selected, indexed points in the message may be heard by selecting the associated "Goto" keyword indicator 270, located adjacent to a keyword. These keywords are detected by a speech recognition sub-system that references a selected listing of words to detect "keywords of interest" for this particular messaging application. More keywords are added to the display during the entire process of the live message monitor as more content is added to the message by caller 135. VMCS system 100 may be further configured to receive input from user 105 of key words that the user would like to watch for in incoming messages. Such key words may be stored, for example, in a database or the like. Other standard or default key words may also be stored in a database.

In accordance with another exemplary embodiment, multiple other users may also be invited to monitor the call within a conference call environment and to converse about the call by selecting a conference function 210 and responding to a dialog box to list the identifiers of the other users. According to one embodiment, each invited user is notified of the call and receives a read-only copy of the monitor control screen. Invited users are able to hear the call after accepting participation into the conference. The original monitoring user 105 may opt to allow conversation or a text-messaging session among conferees without the knowledge of the outside caller 135. In this manner, a group of users may screen a call together and make a decision concerning how it should be handled, for example. During this screening process, the user initiating the conference maintains control over the audio channel and may momentarily cut the audio from caller 135 and allow the conference channel to take precedence. During this time keywords may continue to accumulate as they are identified by the speech recognition engine and the message may be replayed and indexed as directed by the user.

In accordance with another exemplary embodiment, while listening to caller 135 leave a message on a live basis, the intended user 105 may simply terminate the call and delete the message from voicemail system 125. For example, by selecting the delete 215 function, according to one embodiment, caller 135 is provided a preconfigured rejection message, the message is deleted, and the call is terminated. In one embodiment, the message and call are terminated without the canned rejection message. In another embodiment, user 105 may terminate the call to the endpoint device 115; however, the call may continue to be recorded by voicemail system 125.

In accordance with another exemplary embodiment, user 105 may elect to transfer caller 135 to another user by selecting the transfer 205 function and entering the desired user identifier to move the call and notify another user of the call message in progress. For example, upon selecting a transfer icon the system may provide a pop-up window prompting user 105 to enter an extension for the person to whom to transfer the call. The process of monitoring and screening the message may then be conducted by the identified user without the caller's knowledge. In another embodiment, system 100 may provide an audio cue to caller 135 indicating that the message will be transferred to the mailbox of another user.

After listening to a portion of the content of the message, user 105 may elect to retrieve the message and speak with the caller in real-time. In an exemplary embodiment, the user may do so by selecting a retrieve button 220. For example, depending on the preference selected by user 105 in response to a dialogue box that appears immediately after selecting retrieve button 220, system 100 may connect user 105 to caller 135 and delete the previously recorded portion of the message from the voicemail system 125 or maintain a recording file of the message at the voicemail system 125.

In accordance with another exemplary embodiment, interface 200 may present a hot rule button 225. Hot rule button 225 may be configured to invoke system 100 to handle the message using a variety of pre-defined command sequences, referred to herein as "Hot Rules." After selecting the hot rule button 225, user 105 is presented with a dialog box prompting user 105 to select a particular pre-defined hot rule from a list. Once selected, the call from caller 135 is processed in accordance with the call control commands defined within the selected hot rule. For example, a hot rule may dictate that a call is to be immediately terminated and that the recorded portion of the message is to be forwarded to the voice mailbox of a system administrator. Each hot rule may be defined and named by the user in advance prior to its appearance in the dialog of executable hot rules.

In accordance with another exemplary embodiment, the user may also compose an ad hoc note to associate with a message by selecting a note button 230. In response to selecting the note button 230, a text box or dialog box may prompt user 105 to enter a note. The note may be textual, or in another exemplary embodiment, the note may be an audio annotation. In either event, the note may then be associated with the message. The note may remain associated with the message for as long as the message remains on the file with voicemail system 125, or until the note is subsequently deleted. In one embodiment, adding a note attached to a message implies that user 105 intends to save the message. However, a message may be deleted and the call terminated at any time.

In accordance with another exemplary embodiment, other message subscribers may receive copies of a message when user 105 selects a copy button 235. Selection of a copy button 235 invokes system 100 to produce a dialog box to allow selection of a user(s) (via a user identifier such as a name, email address, or extension number) to receive a copy of the message. In accordance with one exemplary embodiment, a message copy represents a duplicate of the message in whatever condition it is in after the call has been terminated. VMCS system 100 may be further configured to send any notes associated with the voicemail message along with the copy to the selected user(s).

In accordance with another exemplary embodiment, the user may further elect to send preconfigured prompts to caller 135 by selecting a prompt button 240. In response, system 100 may provide a dialog box prompting user 105 to choose an appropriate preconfigured audio prompt. The caller 135 may respond to a prompt, and if needed, further action may be taken by user 105. For example, user 105 may use hot rule 225 button or other function keys/icons to continue to process/monitor the call during the voice messaging process. Thus, VMCS system 100 is configured to facilitate user 105 by causing multiple actions to be taken in connection with monitoring a message from a caller. These actions may be taken without actually speaking with caller 135 on a live basis.

One exemplary prompt may include, "I cannot talk right now, but will respond to your message within 15 minutes." Another example may state, "I'm sorry, these matters are handled by customer services at extension 215; please dial that number at the tone." In this case, the prompt is played and the call is terminated in response to using a hot rule rather than a simple prompt by selecting the hot rule button and selecting "Send to Dial Tone" as the process to use on this call.

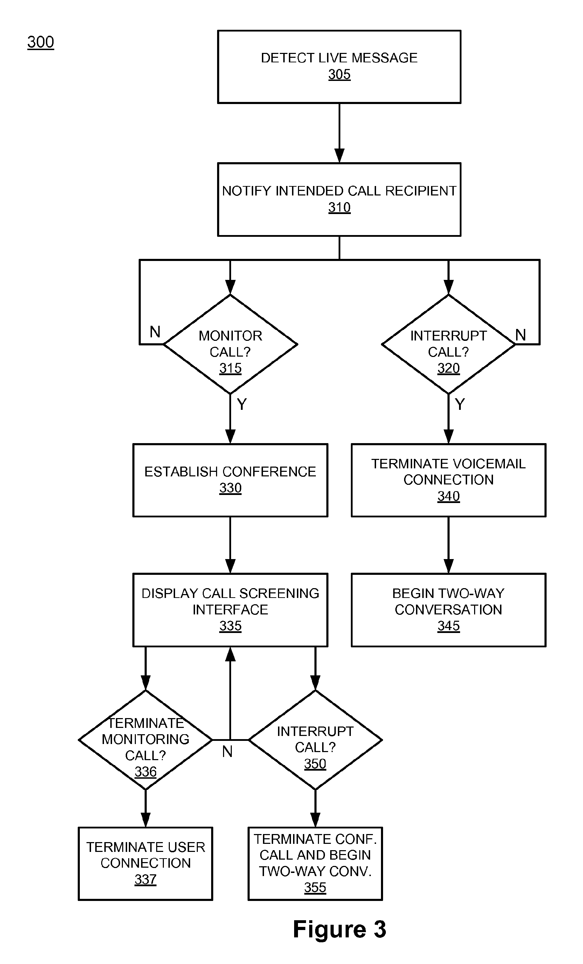

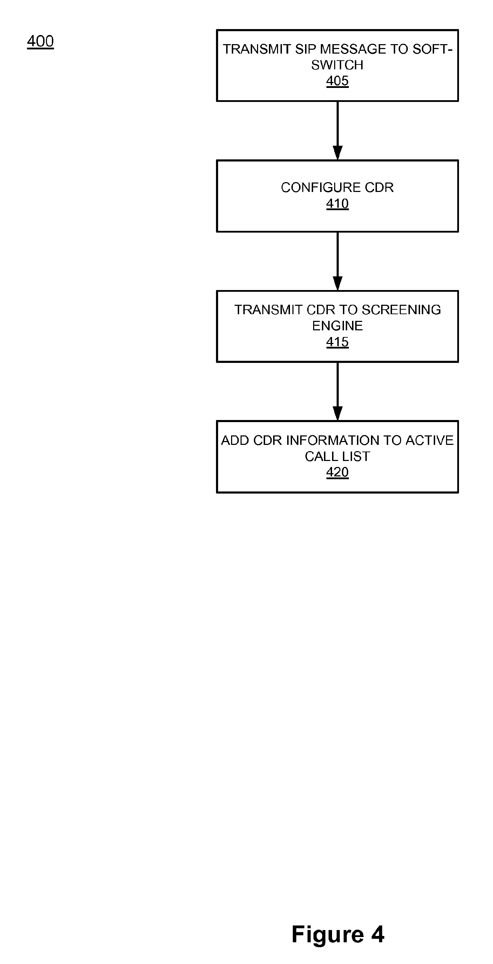

Referring now to Figures 3 and 4, the process flows depicted are merely embodiments of the invention and are not intended to limit the scope of the invention as described above. For example, the steps recited in any of the method or process descriptions may be executed in any order and are not limited to the order presented. It will be appreciated that the following description makes appropriate references not only to the steps depicted in Figures 3 and 4, but also to the various system components as described above with reference to Figure 1 and call screening interface components described above in reference to Figure 2. In one embodiment, system 100 includes personal computer 110 with a call screening interface configured to enable user 105 to interact with system 100. Such an interface may include web pages, websites, web forms, prompts, etc. Practitioners will appreciate that the illustrated steps described below may be facilitated through any number of configurations including the use of web pages, web forms, popup windows, prompts and the like. It should be further appreciated that the multiple steps as illustrated and described may be combined onto single web pages but have been expanded for the sake of simplicity. In other cases, steps illustrated and described as single process steps may be broken down into multiple web pages but have been combined for simplicity.

Practitioners will also appreciate that there are a number of methods for displaying/presenting data within a call screening interface at personal computer 110. Data from system 100 may be represented as standard text or within a fixed list, scrollable list, drop-down list, editable text field, fixed text field, pop-up window, graphical representations, and the like. Likewise, there are a number of methods available for modifying data in a web page such as, for example, free text entry using a keyboard, selection of menu items, check boxes, option boxes, and the like.

In the descriptions for Figure 3 and Figure 4, common reference is made to the process steps of transacting data transmissions between user 105, caller 135 and the various other components of system 100. However, practitioners will appreciate that the steps as described below may be accomplished through any number of process steps and methods producing similar results. As used herein, "transmit" may include sending electronic data from one system component to another over a network connection. Additionally, as used herein, "data" may include encompassing information such as commands, queries, files, data for storage, and the like in digital or any other form.

In accordance with various exemplary embodiments, and with reference to Figure 3, an exemplary method of screening a voice message while it is being left is described. In this exemplary method, system 100 is configured to permit user 105 to screen a call that has been diverted to voicemail system 125 while in the process of being recorded. For example, when system 100 determines that a message is being left in a particular user's mailbox (step 305), a notification is generated and transmitted to the user of the mailbox (step 310).

In one exemplary embodiment, a pop-up message appears providing user 105 with notice of the opportunity to monitor the voice message, perform actions associated with the voice message, and/or interrupt caller 135 to accept the call. The user may be notified that a caller 135 is leaving a voice message by a variety of other methods, as well. For instance, system 100 may be configured to cause a message light indicator on the endpoint to illuminate signifying a caller is leaving a voice message. For example, the message light indicator may be solid when a message is being recorded and then blink when the message has been completed.

In one exemplary embodiment, system 100 may be further configured to display caller ID information to user 105. This information may be displayed automatically or upon request by the user. For example, user 105 may depress a button (e.g., a message light or message key on endpoint device 115) or select an icon or the like on the GUI interface to view the caller's identification. The display of caller ID information may help user 105 determine whether or not to monitor the voice message in progress or interrupt and connect to caller 135.

In yet another embodiment, system 100 may be configured to display to user 105 the amount of time elapsed since caller 135 began leaving a voice message. System 100 may, for example, display the total time numerically or as a progress bar object. In still another embodiment, system 100 may be configured to convert the voice message being left from speech-to-text, and display the entire text of the message or key words spoken in the voicemail message. This information may be displayed by interface 200 so user 105 may view the actual text of the voice message on endpoint device 115 or personal computer 110. The text may be displayed as a rolling ticker, as shown in Figure 2, or through use of any other convenient display technique.

In accordance with an exemplary embodiment, user 105 may chose to interrupt the call (step 320) during the process of leaving the message and connect to the call. For example, user 105 may connect to the call without monitoring the audio at all. In another example, user 105 may listen to a portion of the call and then connect to the call.

In accordance with an exemplary embodiment, interface 200 is configured to present to user 105 a retrieve button 220 on the call screening interface running on personal computer 110 (or system 100 may provide a function key on an endpoint device 115 for the same purpose). User 105 may interrupt the recording and accept the call by selecting the retrieve button/icon on the respective device. In an exemplary embodiment, selecting the retrieve button may immediately connect the call and/or cause other actions to take place. For example, selecting an option to interrupt the recording may present options to user 105 regarding how the user wishes to handle the connection to the call. For example, interface 200 may be configured to present options to keep or erase the recorded portion of the message, to provide a transition prompt to the caller before connecting, to select which transition prompt is played, and/or the like.

In various exemplary embodiments, system 100 may be configured to terminate the recording of the voice message upon connecting the caller and the user (step 340). The termination of the recording of the voice message may occur in various ways. For example, system 100 may be configured to take down the conference call between the voicemail system, conferencing controller and the user and to connect the user and caller directly. In another embodiment, system 100 is configured to change the conference call to a two-way connection between user 105 and caller 135 and terminate the connection to the voicemail system. Upon termination of the recording, voicemail system 125 may store the recorded portion for later listening or delete the recorded portion. Thus, in an exemplary embodiment, screening engine 118 may be configured to send one or more signals to voicemail system 125 to cause voicemail system 125 to handle the call as described herein. User 105 may then engage in a two-way conversation with the caller in the conventional manner (step 345).

If user 105 selects to monitor the call (step 315), then system 100 invokes conferencing controller 130 to establish a conference (330). The conferencing controller 130 establishes a three-way conference call including caller 135, voicemail system 125, and user 105. The leg of the conference call connecting user 105 is a "listen only leg", or one way call. Thus, although monitoring the message is described herein in the context of conference calling, practitioners will appreciate that unlike many typical conference calls, in this instance, caller 135 does not hear user 105 and may not be aware that user 105 is monitoring the message.

In accordance with the invention, the system may display a call screening interface (step 335) such as interface 200. As previously discussed, various options and call-handling features may be presented to the user from the interface.

In accordance with another exemplary embodiment, during monitoring the voicemail message user 105 may decide to stop listening to the message, but may wish to have the caller continue leaving the message (step 336.) Thus, system 100 is configured to stop playing the message and continue recording the call. This may be accomplished, for example, by simply causing conferencing controller 130 to terminate the connection with endpoint device 115 or computer 110 (step 337). In this example, the conference connection between caller 135 and voicemail system 125 is maintained until the caller hangs up or reaches a maximum recording time in which the call is automatically terminated. In another embodiment, however, the conference call may be completely taken down and a direct connection re-established between caller 135 and voicemail system 125.

In accordance with yet another exemplary embodiment, during monitoring the voicemail message user 105 may decide to interrupt the call, for example, to talk directly with the caller (step 350). The system terminates the conference and establishes a two-way conversation between the user and the caller (step 355).

In one embodiment, system 100 may log that the call was screened or monitored in order to keep it available for review as a voicemail message. In addition, in a scenario in which wire tapping has been deployed to meet internal monitoring or CALEA requirements, a call may use the conference feature to conference in an internal auditing party, recording device, or to an external Law Enforcement Agency (LEA).

In accordance with a further exemplary embodiment, and with reference now to Figure 4, a process is described for notifying endpoint device 115 and/or personal computer 110 when a voicemail is being left by a caller. When voicemail system 125 receives a call, the caller is identified and a Session Initiation Protocol (SIP) message is transferred to a switch (step 405). Practitioners will appreciate that a SIP message is a system of formal rules configured to initiate communications sessions between two devices. The soft switch configures a Call Detail Record (CDR) based on the SIP (step 410) and transmits the CDR to screening engine 118 (step 415). Screening engine 118 adds the CDR information (e.g., caller name and telephone number) to an active call list 202 within the voicemail screening interface (step 420).

As will be appreciated by one of ordinary skill in the art, the present invention may be embodied as a customization of an existing system, an add-on product, upgraded software, a stand alone system, a distributed system, a method, a data processing system, a device for data processing, and/or a computer program product. Accordingly, the present invention may take the form of an entirely software embodiment, an entirely hardware embodiment, or an embodiment combining aspects of both software and hardware. Furthermore, the present invention may take the form of a computer program product on a computer-readable storage medium having computer-readable program code means embodied in the storage medium. Any suitable computer-readable storage medium may be utilized, including hard disks, CD-ROM, optical storage devices, magnetic storage devices, and/or the like.

The various system components discussed herein may include one or more of the following: a server or other computing systems including a processor for processing digital data; a memory coupled to said processor for storing digital data; an input digitizer coupled to the processor for inputting digital data; an application program stored in said memory and accessible by said processor for directing processing of digital data by said processor; a display device coupled to the processor and memory for displaying information derived from digital data processed by said processor; and a plurality of databases. Various databases used herein may include: user data, call flow data, dialog state data, carrier data; and/or like data useful in the operation of the present invention. As those skilled in the art will appreciate, a computer may include an operating system (e.g., Windows NT, 95/98/2000, OS2, UNIX, Linux, Solaris, MVS, MacOS, etc.) as well as various conventional support software and drivers typically associated with computers. Personal computer 110 can be in a home or business environment with access to a network. In an exemplary embodiment, access is through a network or the Internet through a commercially-available web-browser software package.

As used herein, the term "network" shall include any electronic communications means which incorporates both hardware and software components of such. Communication among the parties in accordance with the present invention may be accomplished through any suitable communication channels, such as, for example, a telephone network, an extranet, an intranet, Internet, point of interaction device (point of sale device, personal digital assistant, cellular phone, kiosk, etc.), online communications, off-line communications, wireless communications, transponder communications, local area network (LAN), wide area network (WAN), networked or linked devices and/or the like. Moreover, although the invention is frequently described herein as being implemented with TCP/IP communications protocols, the invention may also be implemented using IPX, Appletalk, IP-6, NetBIOS, OSI or any number of existing or future protocols. If the network is in the nature of a public network, such as the Internet, it may be advantageous to presume the network to be insecure and open to eavesdroppers. Specific information related to the protocols, standards, and application software utilized in connection with the Internet is generally known to those skilled in the art and, as such, need not be detailed herein. See, for example, DILIP NAIK, INTERNET STANDARDS AND PROTOCOLS (1998); JAVA 2 COMPLETE, various authors, (Sybex 1999); DEBORAH RAY AND ERIC RAY, MASTERING HTML 4.0 (1997); and LOSHIN, TCP/IP CLEARLY EXPLAINED (1997) and DAVID GOURLEY AND BRIAN TOTTY, HTTP, THE DEFINITIVE GUIDE (1002), the contents of which are hereby incorporated by reference.

The various system components may be independently, separately or collectively suitably coupled to the network via data links which include, for example, a connection to an Internet Provider (ISP) over the local loop as is typically used in connection with standard modem communication, cable modem, Dish networks, ISDN, Digital Subscriber Line (DSL), or various wireless communication methods. See, e.g., GILBERT HELD, UNDERSTANDING DATA COMMUNICATIONS (1996), hereby incorporated by reference. It is noted that the network may be implemented as other types of networks, such as an interactive television (ITV) network.

Any databases discussed herein may be any type of database, such as relational, hierarchical, graphical, object-oriented, and/or other database configurations. Common database products that may be used to implement the databases include DB2 by IBM (White Plains, NY), various database products available from Oracle Corporation (Redwood Shores, CA), Microsoft Access or Microsoft SQL Server by Microsoft Corporation (Redmond, Washington), or any other suitable database product. Moreover, the databases may be organized in any suitable manner, for example, as data tables or lookup tables. Each record may be a single file, a series of files, a linked series of data fields or any other data structure. Association of certain data may be accomplished through any desired data association technique such as those known or practiced in the art. For example, the association may be accomplished either manually or automatically. Automatic association techniques may include, for example, a database search, a database merge, GREP, AGREP, SQL, and/or the like. The association step may be accomplished by a database merge function, for example, using a "key field" in pre-selected databases or data sectors.

More particularly, a "key field" partitions the database according to the high-level class of objects defined by the key field. For example, certain types of data may be designated as a key field in a plurality of related data tables and the data tables may then be linked on the basis of the type of data in the key field. In this regard, the data corresponding to the key field in each of the linked data tables is preferably the same or of the same type. However, data tables having similar, though not identical, data in the key fields may also be linked by using AGREP, for example. In accordance with one aspect of the present invention, any suitable data storage technique may be utilized to store data without a standard format. Data sets may be stored using any suitable technique, including, for example, storing individual files using an ISO/IEC 7816-4 file structure; implementing a domain whereby a dedicated file is selected that exposes one or more elementary files containing one or more data sets; using data sets stored in individual files using a hierarchical filing system; data sets stored as records in a single file (including compression, SQL accessible, hashed via one or more keys, numeric, alphabetical by first tuple, etc.); block of binary (BLOB); stored as ungrouped data elements encoded using ISO/IEC 7816-6 data elements; stored as ungrouped data elements encoded using ISO/IEC Abstract Syntax Notation (ASN.1) as in ISO/IEC 8824 and 8825; and/or other proprietary techniques that may include fractal compression methods, image compression methods, etc.

The computers discussed herein may provide a suitable website or other Internet-based graphical user interface which is accessible by users, hosts or operators of the system. In one embodiment, the Microsoft Internet Information Server (IIS), Microsoft Transaction Server (MTS), and Microsoft SQL Server, are used in conjunction with the Microsoft operating system, Microsoft NT web server software, a Microsoft SQL Server database system, and a Microsoft Commerce Server. Additionally, components such as Access or Microsoft SQL Server, Oracle, Sybase, Informix MySQL, Interbase, etc., may be used to provide an Active Data Object (ADO) compliant database management system.

According to one embodiment, personal computer 110 and/or endpoint device 115 related communications, inputs, storage, databases or displays discussed herein may be facilitated through a website having web pages. The term "web page" as it is used herein is not meant to limit the type of documents and applications that might be used to interact with the user. For example, a typical website might include, in addition to standard HTML documents, various forms, Java applets, JavaScript, active server pages (ASP), common gateway interface scripts (CGI), extensible markup language (XML), dynamic HTML, cascading style sheets (CSS), helper applications, plug-ins, and the like. In relation to interacting with voice applications, the invention contemplates other types of markup language documents including, for example, VXML, CCXML, and SALT. A server may include a web service which receives a request from a web server, the request including a URL (e.g., http://yahoo.com/stockquotes/ge) and an IP address (e.g., 123.56.789). The web server retrieves the appropriate web pages and sends the data or applications for the web pages to the IP address. Web services are applications which are capable of interacting with other applications over a communications means, such as the internet. Web services are typically based on standards or protocols such as XML, SOAP, WSDL and UDDI. Web services methods are well known in the art, and are covered in many standard texts. See, e.g., ALEX NGHIEM, IT WEB SERVICES: A ROADMAP FOR THE ENTERPRISE (1003), hereby incorporated herein by reference.

The present invention may be described herein in terms of functional block components, screen shots, optional selections and various processing steps. It should be appreciated that such functional blocks may be realized by any number of hardware and/or software components configured to perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, the software elements of the present invention may be implemented with any programming or scripting language such as C, C++, Java, COBOL, assembler, PERL, Visual Basic, SQL Stored Procedures, extensible markup language (XML), with the various algorithms being implemented with any combination of data structures, objects, processes, routines or other programming elements. Further, it should be noted that the present invention may employ any number of conventional techniques for data transmission, signaling, data processing, network control, and the like.

Each user 105 may be equipped with a computing device, an endpoint device, or a combination of such devices, in order to interact with system 100 and facilitate live monitoring of one or more messages being recorded at voicemail system 125. User 105 has a computing unit in the form of a personal computer, although other types of computing units may be used including laptops, notebooks, hand held computers, set-top boxes, cellular telephones, touch-tone telephones and the like.

The invention is described herein with reference to screen shots, block diagrams and flowchart illustrations of methods, apparatus (e.g., systems), and computer program products according to various aspects of the invention. It will be understood that each functional block of the block diagrams and the flowchart illustrations, and combinations of functional blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a device configured to implement the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

Accordingly, functional blocks of the block diagrams and flowchart illustrations support combinations of means for performing the specified functions, combinations of steps for performing the specified functions, and program instruction means for performing the specified functions. It will also be understood that each functional block of the block diagrams and flowchart illustrations, and combinations of functional blocks in the block diagrams and flowchart illustrations, can be implemented by either special purpose hardware-based computer systems which perform the specified functions or steps, or suitable combinations of special purpose hardware and computer instructions.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as critical, required, or essential features or elements of any or all the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. Further, no element described herein is required for the practice of the invention unless expressly described as "essential" or "critical".

It should be understood that the detailed description and specific examples, indicating exemplary embodiments of the present invention, are given for purposes of illustration only and not as limitations. Many changes and modifications within the scope of the instant invention may be made without departing from the spirit thereof, and the invention includes all such modifications. Corresponding structures, materials, acts, and equivalents of all elements in the claims below are intended to include any structure, material, or acts for performing the functions in combination with other claim elements as specifically claimed. The scope of the invention should be determined by the appended claims and their legal equivalents, rather than by the examples given above.

## Claims

1. A method for assisting a user in screening a call from a caller while the caller is leaving a voice message, the method comprising the steps of:
identifying at least one voice mailbox that is currently receiving the voice message from the caller;
notifying the user that said at least one voice mailbox is currently receiving the voice message;
prompting the user with available actions that may be taken, wherein said available actions include:
1. listening to the voice message while the voice message is being left; and
2. connecting to the call to begin a two way conversation with the caller; receiving an action input from the user indicating which of said available actions is desired; and
wherein the method further comprises the following steps upon receiving an action input requesting listening to the voice message:
a. establishing a conference call between the caller and said at least one voice mailbox ; and
b. connecting the user to the conference call as a one way call so that the user can only listen to the conference call; and
wherein the method further comprises the following steps upon receiving an action input requesting connecting to the call:
a. connecting to the call to begin a two way conversation with the caller.

2. The method of claim 1, further comprising the step of playing the voice message to the user through one of an endpoint device speaker, an ear piece of a phone unit, and a computer speaker.

3. The method of claim 2, wherein connecting to the call further comprises the steps of:
connecting the user to the caller with a two way call; and
terminating the conference call.

4. The method of claim 2, wherein connecting to the call further comprises the steps of:
connecting the user to the conference call as a two way call so that the user and caller can have a two way communication; and
terminating the conference call to the voice mailbox.

5. The method of claim 1, wherein said notifying occurs by at least one of: a solid message light, an instant message, an audio beep, a flashing message light, a display, an email message, a pop-up message, and an audio dialog prompt.

6. The method of claim 1, wherein said prompting further comprises prompting the user with one or more of the following additional available actions that may be taken:
1. continuing to record the voice message with no screening;
2. interrupting the voice message and prompting the caller with a canned audio segment;
3. stop recording the voice message;
4. saving the voice message;
5. deleting the voice message;
6. viewing the caller's ID; and
7. selecting pre-defined "hot rules".

7. The method of claim 1, wherein said action input may be made by the user doing one of the following: pressing a function button on an endpoint device, pressing a key on a keyboard device associated with a computer, and selection an icon on a computer screen.

8. The method of claim 1, further comprising the steps of:
receiving an input from the user indicating that the user is finished listening to the message;
dropping said user from the conference call; and
continuing to allow the caller leave the voice message.

9. The method of claim 1, further comprising the step of providing call related information to the user, wherein said call related information is useful for making call screening decisions.

10. The method of claim 9, wherein said call related information includes caller identification (ID) and information related to the content of the voice message being left.

11. The method of claim 10, wherein said information related to the content of the voice message being left includes at least one of the following:
cadence of the voice message;
volume of the voice message;
words per minute in the voice message;
key words in the voice message; and
duration of the voice message.

12. The method of claim 11, further comprising the steps of:
displaying said duration of the voice message as it is being left;
displaying said key words that have been identified in the voice message;
displaying a key word location indicator that is configured to facilitate identification of the temporal location(s) where said key word occurs in the voice message; and
receiving an input that causes the voice message to be played starting at or near the occurrence(s) of a selected key word.

13. The method of claim 11, further comprising at least one of the following steps:
converting said voice message, using a speech to text voice recognition system, into text and displaying said text to said user as the voice message is being left;
displaying a progress bar showing the current listening location relative to the total duration of the voice message; and
adding notes or comments to said message.

14. The method of claim 11, further comprising the steps of:
adding other screeners to the conference call to listen to the voice message;
conferencing one or more additional screeners in addition to the user such that all of said one or more additional screeners can listen to the voice message and talk between themselves; and
adding the caller to conference call with or without said one or more additional screeners.

15. A method of receiving a phone call comprising the steps of:
receiving at a soft switch a phone call invite from a caller;
forwarding the phone call invite from said soft switch to an endpoint device;
receiving at said soft switch a busy response from said endpoint device;
sending an invite from said soft switch to a voicemail device and receiving an ok in response;
opening a communication channel between said caller and said soft switch;
receiving from said voice mail device a SIP notification
sending to said endpoint device a notification that a message is being recorded;
receiving an input from said endpoint device indicating that a user wishes to listen to a message being left on said voice mail device;
sending a signal to cause a conferencing controller to establish a conference call between said caller, said user, and said voicemail device, wherein said user is conferenced in a listen-only mode, wherein said conference call is established by:
sending a re-invite; and
setting up communication channels between said caller and said conference server, between said conference server and said voice mail, and between said conference server and said user device;
receiving a connect signal; and
tearing down said communication channels and setting up a direct call between said caller and said user device directly.

16. A call screening system for facilitating a user screening a call from a caller leaving a voice message while the voice message is being left, the system comprising:
a private branch exchange (PBX) device;
a voice mail device configured to communicate with said PBX;
a conference-call device configured to communicate with said PBX; and
an endpoint device configured to communicate with said PBX, wherein said PBX is configured to:
send to the user a notification that the voice message is being left;
receive an input from the user causing said PBX to allow the user to listen in on said voice message as it is being left;
establish a conference call between the caller and said voice mail device and to connect the user to the conference call in a listen only mode; and
receive an input from the user causing said PBX to allow the user to interrupt the caller leaving the voice message to speak directly with the caller.

17. The call screening system of claim 18, wherein said endpoint device is a multifunction telephone, telephone, computer phone.

18. The call screening system of claim 18, wherein said notification comprises at least one of the following: a solid message light, an instant message, an email message, an audio beep, a flashing message light, a display, a pop-up message, and an audio dialog prompt.

19. The call screening system of claim 18, wherein said PBX is configured to place the call into voice mail if not initially answered, wherein said PBX is configured to connect the call to the voice mail through said conference-call device if the user selects to listen to the call and to further create a one way call between said conference call device and said endpoint device.

20. The call screening system of claim 18, further comprising a voice recognition subsystem configured to monitor said message for key words and their temporal location in the voice message and configured to display such key words to the user with the indication of their location.
